# EUROPÄISCHE PATENTSCHRIFT

(11) **EP 2 420 904 B1**
(45) Veröffentlichungstag und Bekanntmachung des Hinweises auf die Patenterteilung: **27.05.2015**
(21) Anmeldenummer: 10012240.7
(22) Anmeldetag: 30.08.2007
(51) Int. Cl.: G05B 19/042, G05B 19/05

(54) **Einrichtung und Verfahren zur Konfiguration eines Steuerungssystems**
Facility and method for configuring a control system
Dispositif et procédé destinés à la configuration d'un système de commande

(30) Priorität: 15.09.2006 DE 102006044141
(43) Veröffentlichungstag der Anmeldung: 22.02.2012
(62) Teilanmeldung aus: 07016974.3
(73) Patentinhaber: dSPACE digital signal processing and control engineering GmbH, 33102 Paderborn (DE)
(72) Erfinder: Biermann, Olaf, 33739 Bielefeld (DE); Grosse, Lars, 37691 Boffzen (DE); Kronmüller, Martin, Dr.-Ing., 33154 Salzkotten (DE); Mertens, Frank, 33175 Bad Lippspringe (DE)
(74) Vertreter: Gesthuysen Patent- und Rechtsanwälte

(56) Entgegenhaltungen:
- EP-A- 1 522 910
- US-A- 5 168 441

## Beschreibung

Die Erfindung betrifft eine Konfigurationseinrichtung zur Konfiguration eines Steuerungssystems mit mindestens einer elektronischen Rechnereinheit und mindestens einem zugeordneten I/O-Gerät, wobei mindestens ein Teil eines mit der Konfiguration korrespondierenden Steuerungsprogramms zur Steuerung des Steuerungssystems erzeugbar ist und wobei die Konfigurationseinrichtung mindestens eine Anzeigevorrichtung aufweist, wobei mindestens ein I/O-Zu-griffspunkt in einem Modellkonfigurationsfeld und mindestens eine Hardwarefunktionalität in einem Funktionskonfigurationsfeld und mindestens eine Hardwareschnittstelle in einem Schnittstellenkonfigurationsfeld mittels der Anzeigevorrichtung darstellbar sind, wobei mindestens ein I/O-Zugriffspunkt und mindestens eine Hardwarefunktionalität einander zuordenbar sind und/oder wobei mindestens eine Hardwarefunktionalität und mindestens eine Hardwareschnittstelle einander zuordenbar sind. Ferner betrifft die Erfindung ein diesbezügliches Computerprogramm.

Einrichtungen und Verfahren zur Konfiguration von Steuerungssystemen und zur automatischen oder teilautomatisierten Erzeugung von Steuerungsprogrammen für Steuerungssysteme sind aus der Praxis in verschiedener Form bekannt und werden vor allem in der angewandten Forschung und der industriellen Entwicklung in dem weiten Feld der Entwicklung und dem Einsatz elektronischer Steuerungssysteme verwendet, nämlich überall dort, wo im weitesten Sinne Prozeßsteuerungsaufgaben gelöst werden müssen. Der Begriff Steuerungssystem wird im folgenden als umfassende Bezeichnung für eine technische Einrichtung verwendet, die im wesentlichen für die Aufgaben Messen, Steuern, Regeln, Kalibrieren eingesetzt wird; es kann sich dabei im weitesten Sinne um ein elektronisches, programmsteuerbares System handeln. Der Begriff ist nicht auf das beschränkt, was im systemtheoretischen Sinne einengend als Steuerung definiert wird.

Ein elektronisches Steuerungssystem der hier in Rede stehenden Art besteht aus mindestens einer elektronischen Rechnereinheit, d. h. aus einem Single- bzw. Multiprozessorsystem, das üblicherweise mit einem Echtzeitbetriebssystem betrieben wird. Diese Rechnereinheit ist mit dem zu steuernden Prozeß über entsprechende I/O-Geräte verbunden.

Unter I/O-Geräten wird im Rahmen der Lehre dieser Erfindung eine große Bandbreite an möglichen technischen Geräten mit einer oder mehreren Außenweltschnittstellen verstanden. Neben den üblichen Geräten mit analogen und digitalen Ein- und Ausgabekanälen zählen dazu unter anderem auch Geräte mit intelligenter Signalverarbeitung zum Pre- und Postprocessing von Daten, Datenbus-Module, Geräte zur Signalkonditionierung, aber zum Beispiel auch Leistungsmodule. Ein I/O-Gerät kann gerätetechnisch eine separate Einheit bilden, die einer Rechnereinheit hinzugefügt werden kann (beispielsweise interner Bussteckplatz in der Rechnereinheit, Ankopplung über eine externe Kommunikationsschnittstelle), es kann aber auch untrennbarer Bestandteil einer Rechnereinheit sein, z. B. wenn in einem Prozessor I/O Gerätefunktionalität integriert umgesetzt wird. Die Lehre der Erfindung ist grundsätzlich auf keine spezielle gerätetechnische Ausführungsform beschränkt oder von einer solchen abhängig.

Die in einem beliebigen Steuerungssystem hardwaremäßig implementierte und nutzbare Funktionalität wird im folgenden als Hardwarefunktionalität bezeichnet; dies kann beispielsweise ein Digital-Analog- oder ein Analog-Digital-Wandler sein, darunter fallen aber auch komplexe parametrierbare Module, wie z. B. Datenbusse (inklusive der Definition der durch sie übertragbaren Nachrichten und ihres Timingverhaltens), digitale Signalprozessoren (inklusive der Beschreibung zur Generierung / Analyse von Signalverläufen) oder auch Module zur Pulsweiten-Modulation von Signalen.

Von den beschriebenen Hardwarefunktionalitäten sind im Rahmen der vorliegenden Erfindung zu unterscheiden die Hardwareschnittstellen des Steuerungssystems. Moderne Steuerungssysteme weisen eine flexible Hardwarearchitektur auf, die es gestattet, Signale, die von einem Modul mit einer bestimmten Hardwarefunktionalität stammen, innerhalb des Steuerungssystems über frei wählbare Signalpfade zu leiten (Routen von Signalpfaden). Dies ist insbesondere für Steuerungssysteme interessant, die neben elementaren I/O-Geräten beispielsweise auch I/O-Geräte für die Signalkonditionierung (zum Beispiel Wandlung von Stromsignalen in Spannungssignale, Wandlung von eingangsseitigen Signalen eines bestimmten Bereichs in ausgangsseitige Signale eines anderen Bereichs) und/oder Leistungsmodule (z. B. Ausgabe von hohen elektrischen Strömen oder Spannungen) umfassen. Bei entsprechend flexibler Hardwarearchitektur eines Steuerungssystems läßt sich beispielsweise frei konfigurieren, welcher Kanal eines I/O-Geräts (z. B. eines Digitalen/Analog-Wandlers) auf welchen eingangsseitigen Kanal eines I/O-Geräts zur Ausgabe von Leistungssignalen geführt wird, auf welchen ausgangsseitigen Kanal dieses I/O-Geräts das Leistungssignal ausgegeben wird und über welchen Pin eines Connectors das Signal letztendlich abgegriffen werden kann; sinngemäß wird mit einzulesenden Signalen verfahren. Insbesondere bei der Arbeit mit großen Steuerungssystemen, die z. B. bei Hardware-In-The-Loop-Prüfständen zum Einsatz kommen, bietet diese Eigenschaft erhebliche Vorteile gegenüber einer nicht konfigurierbaren festen Verdrahtung von Steuerungssystemen. Diese Komponenten des Steuerungssystems werden im folgenden als Hardwareschnittstellen des Steuerungssystems bezeichnet.

Bei der Einrichtung und Konfiguration eines Steuerungssystems sind zwei grundsätzliche Aufgaben zu lösen. In einem ersten Schritt muß im Rahmen der sogenannten Funktionsentwicklung abstrakt, d. h. losgelöst von den Hardware-Eigenschaften des Steuerungssystems, die Funktionalität des Steuerungssystems definiert werden. Darunter ist beispielsweise die mathematische Beschreibung eines auf dem Steuerungssystem zu implementierenden Reglers zu verstehen. Diese Funktionsentwicklung wird üblicherweise durch mathematische Entwurfswerkzeuge unterstützt, die einen blockschaltbild orientierten Entwurf der später auf dem Steuerungssystem zu implementierenden Funktionalität gestattet. Ergebnis der Funktionsentwicklung ist ein mathematisches Modell der geplanten abstrakten Funktionalität des Steuerungssystems, in dem zwar alle notwendigen Eingangs- bzw. Ausgangsgrößen abstrakt bekannt sind, das Modell jedoch keinerlei Bezug zu der Hardwarefunktionalität und den Hardwareschnittsstellen des Steuerungssystems hat. Es ist zwar möglich, mit Hilfe dieses Modells ein Steuerungsprogramm zu erzeugen, das auf dem Steuerungssystem lauffähig ist, jedoch kann ein solches Steuerungsprogramm nicht auf die Hardwarefunktionalität und die Hardwareschnittstellen des Steuerungssystems zugreifen, da in dem abstrakten Modell keine derartigen Informationen zur Konfiguration des Steuerungssystems hinterlegt worden sind.

In einem zweiten grundsätzlichen Schritt bei der Einrichtung und Konfiguration eines Steuerungssystems muß deshalb ein Zusammenhang hergestellt werden zwischen bestimmten Ein- bzw. Ausgangsgrößen des Modells einerseits und andererseits den Hardwarefunktionalitäten bzw. den Hardwareschnittstellen des Steuerungssystems.

Zur Bewältigung der aufgezeigten Aufgabe ist aus dem Stand der Technik bekannt, schon in der Modellierungsumgebung zur Modellierung des abstrakten Modells die Schnittstellen zu den I/O-Geräten zu modellieren. Zu diesem Zweck werden dann beispielsweise ergänzende Blockbibliotheken zur Beschreibung der I/O-Geräte bzw. der Hardwarefunktionalitäten des Steuerungssystems benutzt, wobei verschiedene Blöcke unterschiedliche Hardwarefunktionalitäten repräsentieren, deren Eigenschaften in der Modellierungsumgebung bzw. dem Blockdiagramm, z. B. durch Dialogfenster oder ähnliche Mittel einstellbar sind. Durch Hinterlegung von Informationen in dem ursprünglich abstrakten Modell, die die Hardwarefunktionalitäten und Hardwareeigenschaften des Steuerungssystems betreffen, ist es zwar möglich, aus dem ergänzten Modell nunmehr ein Steuerungsprogramm zu generieren, das nicht nur die abstrakte Funktionalität - beispielsweise eines Regelungsalgorithmus - umsetzt, sondern gleichzeitig auch - beispielsweise durch Aufruf geeigneter Treiber - die Hardwarekomponenten des Steuerungssystems in geeigneter Weise aktiviert, jedoch wird dies mit vielerlei Nachteilen bei der Konfigurierbarkeit des Steuerungssystems erkauft.

Aus der EP 1 522 910 Al ist ein weiteres Verfahren zur Einrichtung und Konfiguration eines Steuerungssystems bekannt, von dem die vorliegende Erfindung ausgeht. Bei diesem Verfahren wird die Zuordnung von bestimmten Ein- bzw. Ausgangsgrößen des abstrakten Modells zu bestimmten Hardwarefunktionalitäten und Hardwareschnittstellen sowie die Parametrierung und Konfiguration der Hardwarefunktionalitäten und Hardwareschnittstellen nicht mehr in dem abstrakten Modell vorgenommen, sondern geschieht dies separat von dem abstrakten Modell. In dem abstrakten Modell werden lediglich bestimmte Signale als (symbolische) I/O-Zugriffspunkte gekennzeichnet, was lediglich bedeutet, daß es sich hierbei um Signale handelt, die auf dem tatsächlichen Steuerungssystem unter Nutzung einer bestimmten Hardwarefunktionalität als physikalisches Signal ausgegeben bzw. als physikalisches Signal eingelesen werden. Die Zuordnung von den I/O-Zugriffspunkten des Modells zu Hardwarefunktionalitäten und von Hardwarefunktionalitäten zu Hardwareschnittstellen erfolgt hier unabhängig von dem Modell, die Zuordenbarkeit der verschiedenen Komponenten des Steuerungssystems ist aufgrund des textuellen, tabellarischen Verfahrens nur eingeschränkt möglich, gleiches gilt für die Orientierung innerhalb der zur Verfügung stehenden Komponenten des Steuerungssystems bei der Konfigurierung oder auch bei der Erfassung einer existierenden Konfiguration.

Aus der US 5,168,441 A ist ebenfalls eine textuelle tabellarische Zuordnung bei einer Vorrichtung zur Einrichtung und Programmierung einer Prozeßsteuerung bekannt , wobei hier I/O-Kanäle der Hardware zu Signalnamen aus einem Modell zugeordnet werden; es liegen die gleichen Probleme vor, die vorstehend in Zusammenhang mit tabellarischen Zuordnungsverfahren aufgezeigt worden sind.

Der Erfindung liegt nun die Aufgabe zugrunde, eine Einrichtung und ein Verfahren zur Konfiguration eines Steuerungssystems und zur Erzeugung mindestens eines Teils eines mit der Konfiguration korrespondierenden Steuerungsprogramms anzubieten, bei denen die oben genannten Nachteile - zumindest teilweise - vermieden werden.

Die zuvor aufgezeigte Aufgabe ist erfindungsgemäß zunächst bei einer Konfigurationseinrichtung der in Rede stehenden Art zur Konfiguration eines Steuerungssystems mit mindestens einer elektronischen Rechnereinheit und wenigstens einem zugeordneten I/O-Gerät gelöst durch die Merkmale des Kennzeichnungsteils von Patentanspruch 1.

Die erfindungsgemäße Konfigurationseinrichtung ist gegenüber dem Stand der Technik in vielerlei Hinsicht vorteilhaft. Dadurch, daß die Elemente der verschiedenen Konfigurationsfelder durch Blöcke mit Eingangs- und/oder Ausgangsports dargestellt werden, sind technische und funktionale Einheiten innerhalb der Konfigurationsfelder (Modellkonfigurationsfeld, Funktionskonfigurationsfeld und Schnittstellenkonfigurationsfeld) darstellbar, die auch in der Konfigurationsumgebung hardwaremäßige und logische Funktionseinheiten des zu konfigurierenden Steuerungssystems widerspiegeln. Anders als bei einer rein tabellenartigen Repräsentation separater Kanäle einer Hardwareeinheit - wie z. B. die Kanäle eines A/D-Wandlers - ist die blockorientierte Darstellung von Elementen eines Konfigurationsfeldes in sinnfälliger Weise strukturierbar und unterstützt damit mit technischen Mitteln die Konfigurierbarkeit eines Steuerungssystems ganz erheblich. Die erfindungsgemäße Konfigurationseinrichtung weist gegenüber dem Stand der Technik den weiteren Vorteil auf, daß Elemente der verschiedenen Konfigurationsfelder, also I/O-Zugriffspunkte des Modellkonfigurationsfeldes, Hardwarefunktionalitäten des Funktionskonfigurationsfeldes bzw. Hardwareschnittstellen des Schnittstellenkonfigurationsfeldes in der blockorientierten Darstellung durch graphische Zuordnungsmittel zuordenbar sind, wodurch bei der Konfiguration in sinnfälliger Weise sofort erkennbar ist, welche Elemente der Konfigurationsfelder noch nicht im Rahmen der Konfiguration verwendet worden sind und daher noch weiter bei der Einrichtung und Konfiguration des Steuerungssystems frei zur Verfügung stehen. Darüber hinaus ist unmittelbar erkennbar, welche Zuordnungen zwischen den Elementen verschiedener Konfigurationsfelder bereits vorgenommen worden sind, wobei auch mehrere Zuordnungen gleichzeitig in eindeutiger Weise, unmißverständlich darstellbar und erkennbar sind.

Vorteilhaft, jedoch nicht Gegenstand der Erfindung, sind mit den Eingangs- und Ausgangsports die möglichen und/oder die tatsächlichen Signalrichtungen der I/O-Zugriffspunkte im Modellkonfigurationsfeld und/oder der Hardwarefunktionalitäten im Funktionskonfigurationsfeld und/oder der Hardwareschnittstellen im Schnittstellenkonfigurationsfeld anzeigbar. Diese Ausgestaltung der Konfigurationseinrichtung ermöglicht automatisch eine Verfolgung der Signalflüsse innerhalb des konfigurierten Steuerungssystems mit der Konfigurationseinrichtung, was wiederum mit den aus dem Stand der Technik bekannten tabellenartigen Zuordnungen nicht möglich ist. Gleichzeitig hilft diese Maßnahme, Fehlzuordnungen zwischen I/O-Zugriffspunkten, Hardwarefunktionalitäten und Hardwareschnittstellen zu vermeiden, da der Ein- bzw. Ausgangscharakter der entsprechenden Ports der Blöcke erkennbar ist und so beispielsweise die falsche Zuordnung von Ausgängen zu Ausgängen bzw. von Eingängen zu Eingängen offensichtlich und automatisch durch die Konfigurationseinrichtung erkennbar wird.

Erfindungsgemäß sind die dargestellten Inhalte des Modellkonfigurationsfeldes und/oder des Funktionskonfigurationsfeldes und/oder des Schnittstellenkonfigurationsfeldes so relativ zueinander verschiebbar, daß einander zugeordnete oder zuzuordnende I/O-Zugriffspunkte und/oder Hardwarefunktionalitäten und/oder Hardwareschnittstellen benachbart zueinander gleichzeitig darstellbar und damit einander zuordenbar sind und/oder gemeinsam konfigurierbar sind.

Die relative Verschiebbarkeit der Inhalte kann sich beispielsweise in einer Bewegungsrichtung erschöpfen, wenn die Inhalte der Konfigurationsfelder zeilen- oder spaltenartig angeordnet sind. Durch die Verschiebbarkeit der Inhalte zweier Konfigurationsfelder können beliebige Teilinhalte der verschiedenen Konfigurationsfelder in unmittelbare Nachbarschaft zueinander gebracht werden, so daß sie durch graphische Zuordnungsmittel einander zuordenbar sind, vorliegend und erfindungsgemäß also durch Signallinien miteinander verbunden werden können. Dabei können erfindungsgemäß einmal durch Signallinien vorgenommene Zuordnungen zwischen Elementen verschiedener Konfigurationsfelder auch bei der Relativbewegung von Inhalten dieser Felder beibehalten werden, indem die Signallinien der Relativbewegung elastisch folgen. Durch die benachbarte Darstellung der Inhalte von verschiedenen Konfigurationsfeldern wird auch gewährleistet, daß Konfigurationen von I/O-Zugriffspunkten, Hardwarefunktionalitäten und Hardwareschnittstellen aufeinander abstimmbar sind, da diese gleichzeitig eingesehen und miteinander abgeglichen werden können.

In einem bevorzugten Ausführungsbeispiel ist die erfindungsgemäße Konfigurationseinrichtung derart ausgestaltet, daß zu mindestens einem ausgewählten I/O-Zugriffspunkt im Modellkonfigurationsfeld oder zu mindestens einer Hardwarefunktionalität im Funktionskonfigurationsfeld oder zu mindestens einer Hardwareschnittstelle im Schnittstellenkonfigurationsfeld die zugeordneten und/oder zuordenbaren I/O-Zugriffspunkte und/oder Hardwarefunktionalitäten und/oder Hardwareschnittstellen automatisch erkennbar und mit der Anzeigevorrichtung selektiv darstellbar sind. Das bedeutet, daß die Konfigurationseinrichtung bei Auswahl eines Elements eines Konfigurationsfeldes automatisch in den anderen Konfigurationsfeldern die mit dem ausgewählten Element verbundenen Elemente der anderen Konfigurationsfelder zur Darstellung bringt. Dies kann durch Verschieben der Inhalte der anderen Konfigurationsfelder geschehen oder aber auch durch Umordnung der Elemente innerhalb der anderen Konfigurationsfelder. Mit dieser Funktionalität ist es auch möglich, zu dem ausgewählten Element eines Konfigurationsfeldes innerhalb der anderen Konfigurationsfelder nur die dem ausgewählten Element potentiell zuordenbaren Elemente anzuzeigen, indem beispielsweise zu einem als Ausgang gekennzeichneten I/O-Zugriffspunkt nur solche Hardwarefunktionalitäten und Hardwareschnittstellen angezeigt werden, die ihrerseits eine Ausgangsfunktionalität aufweisen, die also tatsächlich ein Ausgangssignal generieren können.

Die Konfigurationseinrichtung unterstützt den Konfigurationsvorgang ferner dadurch, daß formale Fehler bei der Konfiguration erkannt und angezeigt werden, beispielsweise dann, wenn Eingangsports bzw. Ausgangsports von - verschiedenen - Blöcken jeweils untereinander verbunden werden, ohne daß das Verbindungsmittel mit einem komplementären Ausgangsport bzw. Eingangsport verbunden ist.

Erfindungsgemäß sind mehrere I/O-Zugriffspunkte im Modellkonfigurationsfeld und/oder mehrere Hardwarefunktionalitäten im Funktionskonfigurationsfeld und/oder mehrere Hardwareschnittstellen im Schnittstellenkonfigurationsfeld jeweils zu einer übergeordneten Einheit zusammenfaßbar, insbesondere zu einem übergeordneten Block. Dies hat den Vorteil, daß beispielsweise alle zur Umsetzung einer bestimmten Funktionalität - z. B. Lambda-Sonde - notwendigen Hardwarefunktionalitäten gruppierbar sind und damit innerhalb eines Konfigurationsfeldes nicht mehr zergliedert und ihrem Sinnzusammenhang entrissen werden können.

In einer weiteren bevorzugten Ausgestaltung der Erfindung sind alle verfügbaren I/O-Zugriffspunkte und/oder Hardwarefunktionalitäten und/oder Hardwareschnittstellen in einem Auswahlfeld darstellbar und einzeln aus wählbar, wobei ausgewählte I/O-Zugriffspunkte und/oder Hardwarefünktionalitäten und/oder Hardwareschnittstellen von dem Auswahlfeld in das jeweils korrespondierende Konfigurationsfeld (Modellkonfigurationsfeld, Funktionskonfigurationsfeld, Schnittstellenkonfigurationsfeld) übertragbar sind. Dabei ist es durchaus beabsichtigt, daß nur eine Auswahl i. S. einer Teilmenge der verfügbaren I/O-Zugriffspunkte und/oder Hardwarefünktionalitäten und/oder Hardwareschnittstellen in dem korrespondierenden Konfigurationsfeld angeordnet werden können, um lediglich einen überschaubaren Aspekt des Steuerungssystems zu konfigurieren, um beispielsweise nur diejenigen Resourcen des Steuerungssystems zu konfigurieren, die zur Erledigung der jeweils vorliegenden Aufgabenstellung erforderlich sind.

Wie auch bei aus dem Stand der Technik bekannten Konfigurationseinrichtungen verfügt auch die erfindungsgemäße Konfigurationseinrichtung zwangsläufig über Schnittstellen, über die die Konfigurationseinrichtung Informationen über die verfügbaren I/O-Zugriffspunkte, Hardwarefunktionalitäten und Hardwareschnittstellen erhält. Dabei kann es sich lediglich um eine Datei- bzw. Datenbankschnittstelle handeln, genauso gut kann es sich aber auch um eine Schnittstelle zu einer vorhandenen Modellierungseinrichtung und/oder zu einem real vorhandenen Steuerungssystem handeln, über die die Konfigurationseinrichtung das mit der Modellierungseinrichtung erstellte Modell mit seinen I/O-Zugriffspunkten bzw. die Hardwarefunktionalitäten und die Hardwareschnittstellen des angeschlossenen Steuerungssystems automatisch erkennt und der Konfiguration zugänglich macht.

Die Gesamtheit der verfügbaren Informationen ist dann in dem Auswahlfeld darstellbar, wobei eine Auswahl von I/O-Zugriffspunkten, Hardwarefunktionalitäten und Hardwareschnittstellen aus dem Auswahlfeld in das korrespondierende Konfigurationsfeld übertragen werden können. Dies ist beispielsweise dann sinnvoll, wenn mit der Konfigurationsumgebung z. B. nur ein beschränkter Aspekt des Steuerungssystems konfiguriert werden soll und auf die Darstellung aller Elemente innerhalb der Konfigurationsfelder aus Gründen der Übersichtlichkeit bewußt verzichtet wird.

In diesem Zusammenhang ist eine bevorzugte Ausgestaltung der Konfigurationseinrichtung dadurch gekennzeichnet, daß mindestens eine Auswahl von I/O-Zugriffspunkten und/oder von Hardwarefunktionalitäten und/oder von Hardwareschnittstellen in mindestens einer Arbeitsansicht zusammenfaßbar sind, wobei besonders bevorzugt nicht in der Auswahl enthaltene I/O-Zugriffspunkte, Hardwarefunktionalitäten und Hardwareschnittstellen nicht angezeigt werden und nicht konfigurierbar sind. Es ist demzufolge möglich, verschiedene Ausschnitte bzw. Elemente ein und desselben Steuerungssystems in verschiedenen, voneinander unabhängigen Arbeitsansichten darzustellen und zu konfigurieren; dies unterstützt und vereinfacht die arbeitsteilige Konfiguration eines Steuerungssystems erheblich. Das bedeutet mit anderen Worten, daß die verschiedenen Auswahlen von I/O-Zugriffspunkten und/oder von Hardwarefunktionalitäten und/oder von Hardwareschnittstellen verschiedener Arbeitsansichten Schnittmengen aufweisen können.

Hinsichtlich des Aspekts der Arbeitsansichten ist eine bevorzugte Konfigurationseinrichtung so ausgestaltet, daß mehrere Arbeitsansichten zu einer einzigen Arbeitsansicht zusammenführbar sind, wobei mehrfach vorhandene identische I/O-Zugriffspunkte und/oder Hardwarefunktionalitäten und/oder Hardwareschnittstellen aus der einzigen Arbeitsansicht eliminiert werden, so daß keinerlei Redundanzen mehr in der einzigen Arbeitsansicht auftreten. Bevorzugt sind die aus verschiedenen Arbeitsansichten stammenden I/O-Zugriffspunkte und/oder Hardwarefunktionalitäten und/oder Hardwareschnittstellen voneinander unterscheidbar darstellbar, beispielsweise indem sie farblich unterschiedlich dargestellt sind.

Nach einer weiteren Lehre der Erfindung ist die oben aufgezeigte Aufgabe ferner mit einem Verfahren zur Erzeugung mindestens eines Teils eines ausführbaren Steuerungsprogramms zur Steuerung eines Steuerungssystems mit mindestens einer elektronischen Rechnereinheit und mindestens einem zugeordneten I/O-Gerät dadurch gelöst, daß die I/O-Zugriffspunkte im Modellkonfigurationsfeld, die Hardwarefunktionalitäten im Funktionskonfigurationsfeld und die Hardwareschnittstellen im Schnittstellenkonfigurationsfeld durch Blöcke mit Eingangs- und/oder Ausgangsports dargestellt werden, daß I/O-Zugriffspunkte und/oder Hardwarefunktionalitäten und/oder Hardwareschnittstellen einander durch graphische Zuordnungsmittel - insbesondere durch Signallinien - zugeordnet werden und daß unter Verwendung der in den vorherigen Verfahrensschritten gewonnenen Konfigurationsdaten das Steuerungsprogramm oder ein Teil des Steuerungsprogramms zur Steuerung eines Steuerungssystems automatisch generiert wird.

In einer besonders vorteilhaften Ausgestaltung des erfindungsgemäßen Verfahrens werden die angezeigten Inhalte des Modellkonfigurationsfeldes und/ oder des Funktionskonfigurationsfeldes und/oder des Schnittstellenkonfigurationsfeldes so relativ zueinander verschoben, daß einander zugeordnete oder zuzuordnende I/O-Zugriffspunkte und/oder Hardwarefunktionalitäten und/ oder Hardwareschnittstellen benachbart zueinander gleichzeitig angezeigt werden und nachfolgend einander zugeordnet und/oder gemeinsam konfiguriert werden.

Im einzelnen gibt es nun eine Vielzahl von Möglichkeiten, die erfindungsgemäße Konfigurationseinrichtung zur Konfiguration eines Steuerungssystems bzw. das erfindungsgemäße Verfahren auszugestalten und weiterzubilden. Dazu wird verwiesen sowohl auf die den Patentansprüchen 1 und 10 nachgeordneten Patentansprüche als auch auf die Beschreibung eines in der Zeichnung dargestellten Ausführungsbeispiels der erfindungsgemäßen Konfigurationseinrichtung bzw. des erfindungsgemäßen Verfahrens zur Konfiguration eines Steuerungssystems. In der Zeichnung zeigen
- Fig. 1: die Konfiguration eines Steuerungssystems mit einem bevorzugten Ausführungsbeispiel der erfmdungsgemäßen Konfigurationseinrichtung,
- Fig. 2: das Anfangsstadium der Konfiguration eines Steuerungssystems mit der erfindungsgemäßen Konfigurationseinrichtung,
- Fig. 3: eine weiter fortgeschrittene Konfiguration eines Steuerungssystems mit dem bevorzugten Ausführungsbeispiel einer erfindungsgemäßen Konfigurationseinrichtung,
- Fig. 4: eine noch weiter fortgeschrittene Konfiguration eines Steuerungssystems mit dem bevorzugten Ausführungsbeispiel einer erfindungsgemäßen Konfigurationseinrichtung,
- Fig. 5: eine noch weiter fortgeschrittene Konfiguration eines Steuerungssystems mit dem bevorzugten Ausführungsbeispiel einer erfindungsgemäßen Konfigurationseinrichtung,
- Fig. 6: die Konfiguration nach Fig. 5 mit expandierter Blockdarstellung,
- Fig. 7: die Konfiguration nach Fig. 1 mit reduzierter Blockdarstellung,
- Fig. 8: die Konfiguration nach den Fig. 1 und 7 in gemischt reduzierter und expandierter Blockdarstellung,
- Fig. 9: eine weitere Konfiguration eines Steuerungssystems nach einem bevorzugten Ausführungsbeispiel der erfindungsgemäßen Konfigurationseinrichtung und
- Fig. 10: ein letztes Beispiel für die Konfiguration eines Steuerungssystems mit der erfindungsgemäßen Konfigurationseinrichtung bzw. mit dem erfindungsgemäßen Verfahren.

Die Fig. I bis 10 zeigen jeweils bevorzugte Ausführungsbeispiele eines erfindungsgemäßen Konfigurationssystems 1 bzw. den über eine Anzeigevorrichtung 2 wahrnehmbaren Teil der Konfigurationseinrichtung 1; ebenso ist anhand der Fig. I bis 10 die Durchführung des erfindungsgemäßen Verfahrens zur Konfiguration eines Steuerungssystems ersichtlich.

Steuerungssysteme, auf die hier im folgenden Bezug genommen wird, bestehen aus einer elektronischen Rechnereinheit und mindestens einem zugeordneten I/O-Gerät, wobei weder die Rechnereinheit noch das zugeordnete I/0-Gerät im folgenden bildlich dargestellt sind. Abschließendes Ziel der Konfiguration ist es, mit Hilfe der vorgenommenen Konfiguration des Steuerungssystems ein Steuerungsprogramm zu erzeugen, mit dessen Hilfe das Steuerungssystem gesteuert werden kann. Dabei kann es auch sein, daß die Konfigurationseinrichtung nur den Teil des Steuerungsprogramms zur Steuerung des Steuerungssystems erzeugt, der auf der mit der Konfigurationseinrichtung vorgenommenen Konfiguration des Steuerungssystems beruht. Dieser Teil des Steuerungsprogramms muß auf dem Steuerungssystem nicht selbständig lauffähig sein, vielmehr kann es sich hierbei auch nur um eine Bibliothek von Funktionen handeln, die aus einem anderen Programm heraus zur hardwaremäßigen Ansteuerung des Steuerungssystems aufgerufen wird. Die Konfigurationseinrichtung ist grundsätzlich auch nicht beschränkt auf irgendeine spezielle softwaretechnische Umsetzung des erzeugten Steuerungsprogramms bzw. eines Teils eines Steuerungsprogramms. Hierbei kann es sich beispielsweise um einen fertig kompilierten - und damit unmittelbar auf dem eingesetzten Steuerungssystem lauffähigen - Code handeln, es kann sich dabei aber genauso gut um beispielsweise einen Bytecode handeln, der erst über eine virtuelle Maschine, die auf dem Steuerungssystem implementiert ist, interpretiert werden muß, um dann ausgeführt zu werden.

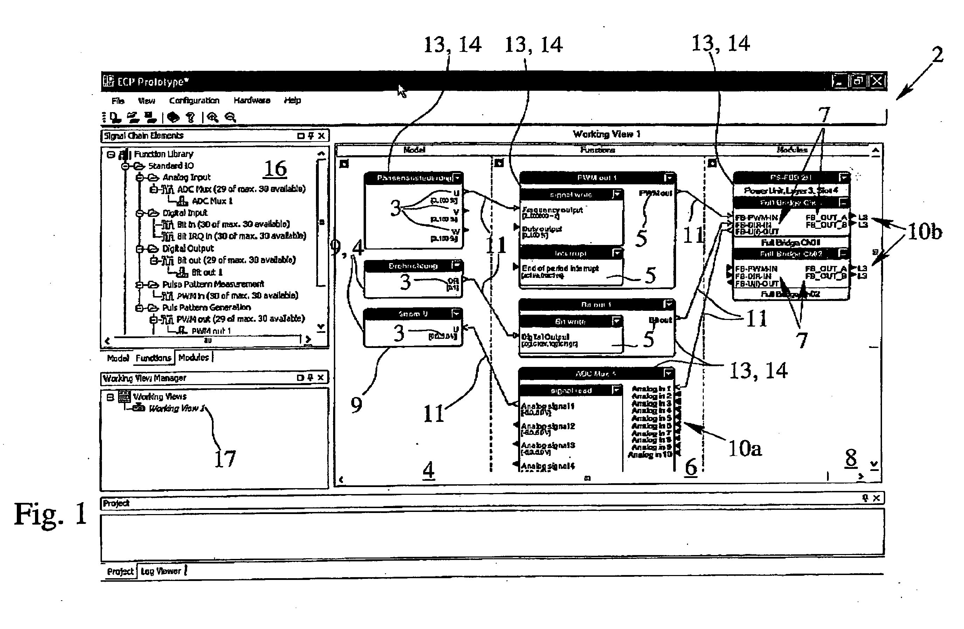

Fig. 1 zeigt ein mit der Konfigurationseinrichtung teilweise fertig konfiguriertes Steuerungssystem, wobei mehrere I/O-Zugriffspunkte 3 in einem Modellkonfigurationsfeld 4 mehrere Hardwarefunktionalitäten in einem Funktionskonfigurationsfeld 6 und mehrere Hardwareschnittstellen 7 in einem Schnittstellenkonfigurationsfeld 8 mittels der Anzeigevorrichtung 2 dargestellt werden. Durch die erfindungsgemäße Ausgestaltung der Konfigurationseinrichtung sind I/O-Zugriffspunkte 3 und Hardwarefunktionalitäten 5 grundsätzlich einander zuordenbar, genauso wie Hardwarefunktionalitäten 5 wiederum Hardwareschnittstellen 7 zuordenbar sind.

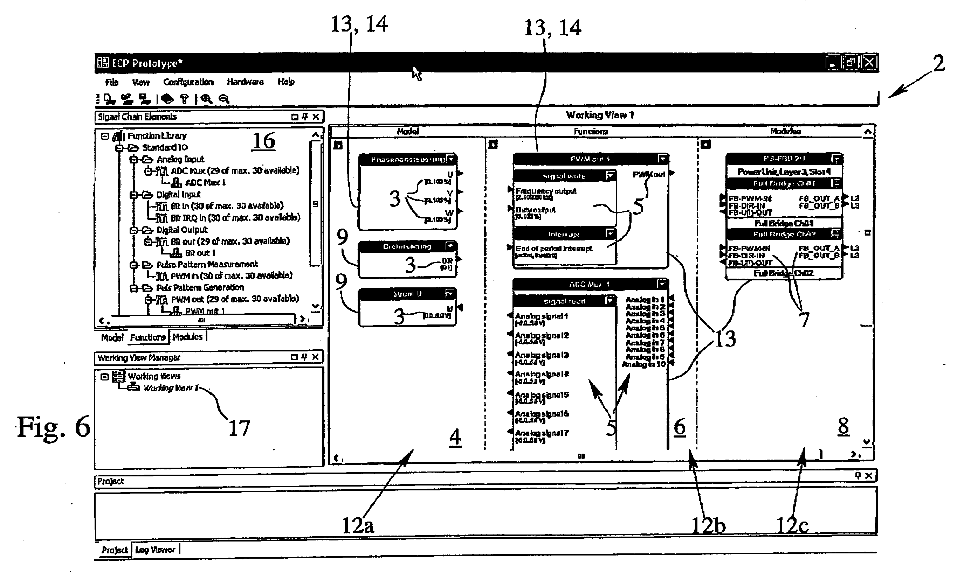

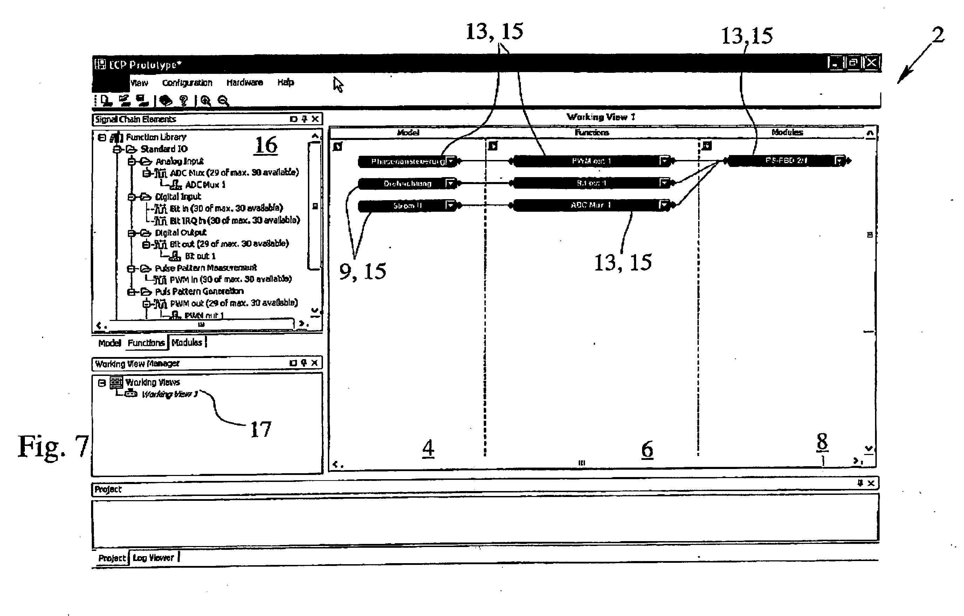

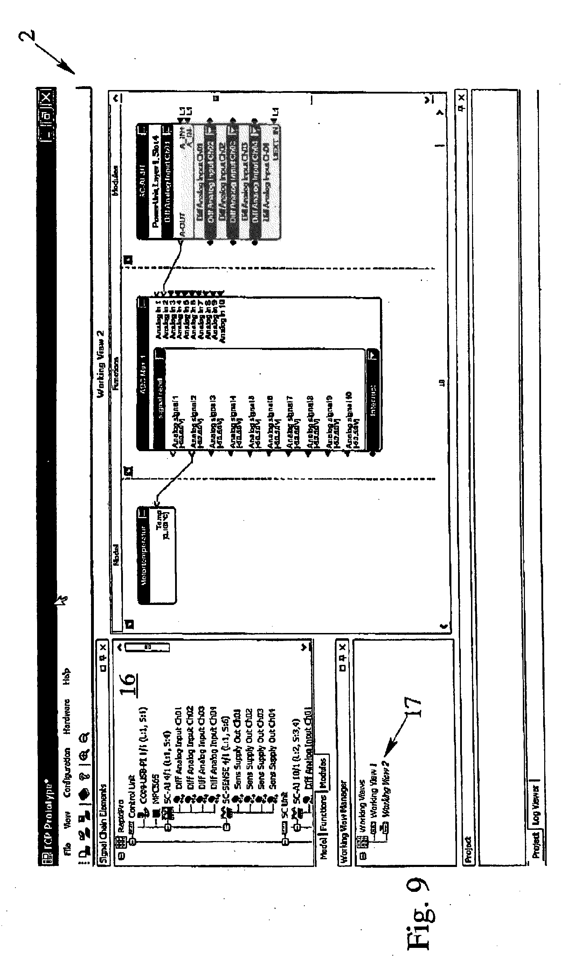

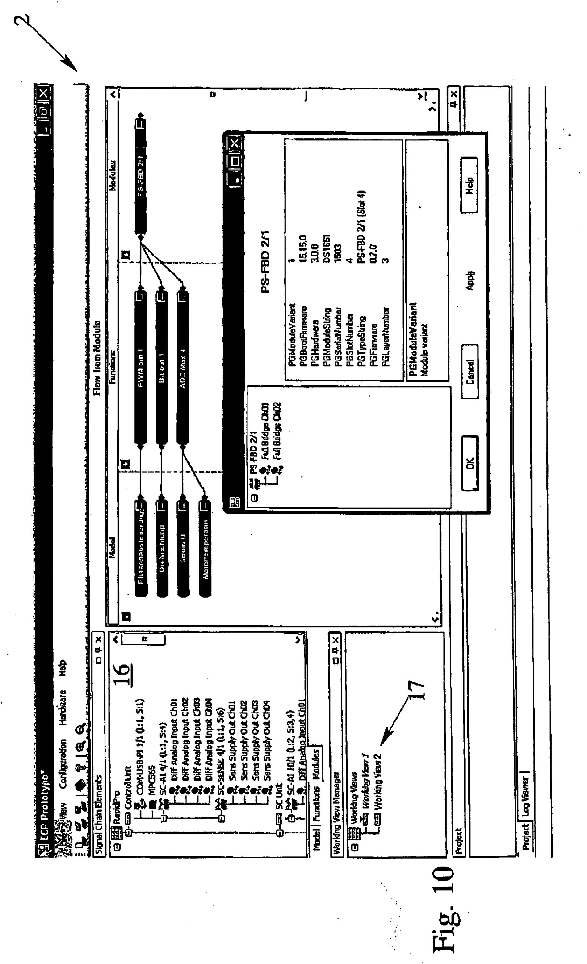

Das in den Fig. 1 bis 10 dargestellte Ausführungsbeispiel der erfindungsgemäßen Konfigurationseinrichtung zeichnet sich dadurch aus, daß die I/O-Zugriffspunkte 3 im Modellkonfigurationsfeld 4, die Hardwarefunktionalitäten 5 im Funktionskonfigurationsfeld 6 und die Hardwareschnittstellen 7 im Schnittstellenkonfigurationsfeld 8 durch Blöcke 9 mit Eingangs- und/oder Ausgangsports 10a, 10b darstellbar sind, wobei die I/O-Zugriffspunkte 3 und/oder die Hardwarefunktionalitäten 5 und/ oder die Hardwareschnittstellen 7 einander durch graphische Zuordnungsmittel zuordenbar sind. In allen in den Fig. 1 bis 10 dargestellten Ausführungsbeispielen sind diese graphischen Zuordnungsmittel als Signallinien 11 implementiert.
Die Repräsentation von I/O-Zugriffspunkten 3, Hardwarefunktionalitäten 5 und Hardwareschnittstellen 7 in den korrespondierenden Konfigurationsfeldern 4, 6, 8 durch Blöcke 9 und die Zuordnung einzelner Elemente der Konfigurationsfelder durch Signallinien 11 zwischen den Eingangs- bzw. Ausgangsports 10a, 10b der entsprechenden Blöcke 9 vereinfacht und beschleunigt die Konfiguration eines Steuerungssystems gegenüber den bekannten textuellen Techniken erheblich.

Besonders vorteilhaft ist es, wenn, wie in den Fig. 1, 6, 8 und 9 dargestellt, die Eingangs- und Ausgangsports 10a, 10b so ausgestaltet sind, daß sie die möglichen und/oder tatsächlichen Signalrichtungen der I/O-Zugriffspunkte 3 im Modellkonfigurationsfeld 4 und/oder der Hardwarefunktionalitäten 5 im Funktionskonfigurationsfeld 6 und/oder der Hardwareschnittstellen 7 im Schnittstellenkonfigurationsfeld 8 anzeigen. Dadurch wird Fehlzuordnungen vorgebeugt, die beispielsweise daraus resultieren können, daß Eingangsports 10a miteinander verbunden werden bzw. Ausgangsports 10b miteinander verbunden werden. Bei den Blöcken 9 in den Fig. 1, 6, 8 und 9, werden die Signalrichtungen durch Eingangs- und Ausgangsports 10a, 10b symbolisiert, welche als Pfeile ausgestaltet sind, die entweder von dem jeweiligen Block 9, weg- oder zu dem jeweiligen Block 9 hinzeigen.

Die Ausführungsbeispiele der Konfigurationseinrichtung gemäß den Fig. 1 bis 10 zeichnen sich darüber hinaus dadurch aus, daß die dargestellten Inhalte 12a, 12b, 12c des Modellkonfigurationsfeldes 4 und/oder des Funktionskonfigurationsfeldes 6 und/oder des Schnittstellenkonfigurationsfeldes 8 so relativ zueinander verschiebbar sind, daß einander zugeordnete oder zuzuordnende I/O-Zugriffspunkte 3 und/oder Hardwarefunktionalitäten 5 und/oder Hardwareschnittstellen 7 benachbart zueinander gleichzeitig darstellbar und damit einander zuordenbar sind und/oder gemeinsam konfigurierbar sind.

Anhand der Fig. 1 bis 10 ist ersichtlich, daß die Inhalte 12a, 12b, 12c sowohl des Modellkonfigurationsfeldes 4 als auch des Funktionskonfigurationsfeldes 6 sowie des Schnittstellenkonfigurationsfeldes 8 spaltenartig nebeneinander angeordnet sind. Da die Konfigurationsfelder 4, 6, 8 nur eine begrenzte Ausdehnung haben, lassen sich naturgemäß nicht alle Inhalte 12a, 12b, 12c dieser Felder gleichzeitig darstellen. Die Übersichtlichkeit bei der Zuordnung von Elementen der Konfigurationsfelder 4, 6, 8 wird dadurch gewährleistet, daß die Inhalte 12a, 12b, 12c der Konfigurationsfelder 4, 6, 8 in vertikaler Richtung so gegeneinander bewegt werden können, daß die einander zuzuordnenden Elemente nebeneinander zu liegen kommen und damit verbindbar bzw. gemeinsam konfigurierbar sind.

Bei einer großen Anzahl von I/O-Zugriffspunkten 3, Hardwarefunktionalitäten 5 und Hardwareschnittstellen 7 werden durch die Konfigurationseinrichtungen gemäß den Fig. 1 bis 10 wahlweise nur die Signallinien 11 dargestellt, die sichtbare Inhalte 12 der Konfigurationsfelder 4, 6, 8 miteinander verbinden, d. h. daß Signallinien, die außerhalb der Konfigurationsfelder 4, 6, 8 beginnen oder enden, bei Bedarf zur Wahrung der Übersichtlichkeit ausgeblendet werden können.

In den Fig. 1, 6, 7 und 8 ist zu erkennen, daß es mit den dargestellten Konfigurationseinrichtungen möglich ist, mehrere I/O-Zugriffspunkte 3 im Modellkonfigurationsfeld 4 oder mehrere Hardwarefunktionalitäten 5 im Funktionskonfigurationsfeld 6 und/oder mehrere Hardwareschnittstellen 7 im Schnittstellenkonfigurationsfeld 8 jeweils zu einer übergeordneten Einheit 13 zusammenzufassen. In allen dargestellten Fällen werden die überordneten Einheiten 13 durch einen übergeordneten Block repräsentiert. Aufgrund dieser Eigenschaft ist es beispielsweise möglich, alle Hardwarefunktionalitäten 5, die hardwaremäßig oder funktional zusammenhängen, in einer übergeordneten Einheit 13 zusammenzufassen. In den Fig. 1, 6 und 8 gibt es in dem Modellkonfigurationsfeld 4 beispielsweise die übergeordnete Einheit 13 "Phasenansteuerung" und in dem Funktionskonfigurationsfeld 6 die übergeordneten Einheiten 13 'PWM out 1' und "ADC Mux 1", und das Schnittstellenkonfigurationsfeld 8 weist als übergeordnete Einheit 13 den mit 'PS-FBD 2/1" bezeichneten Block auf.

Es hat sich bei den in den Fig. 1 bis 10 dargestellten Ausführungsbeispielen einer Konfigurationseinrichtung als besonders vorteilhaft herausgestellt, wenn erfindungsgemäß eine übergeordnete Einheit 13 in einer expandierten Darstellung 14 (siehe z. B. alle überordneten Einheiten 13 in den Fig. I und 6) angezeigt wird, die alle Eingangs- und Ausgangsports 10a, 10b der von der übergeordneten Einheit 13 umfaßten I/O-Zugriffspunkte 3 oder Hardwarefunktionalitäten 5 oder Hardwareschnittstellen 7 separat darstellen kann, oder wenn alternativ eine übergeordnete Einheit 13 in einer reduzierten Darstellung IS alle Eingangs- und Ausgangsports 10a, 10b der von der übergeordneten Einheit 13 umfaßten I/O-Zugriffspunkte 3 oder Hardwarefunktionalitäten 5 oder Hardwareschnittstellen 7 durch wenigstens einen gemeinsamen Eingangs- und/oder wenigstens einen gemeinsamen Ausgangsport 10c, 10d darstellt.

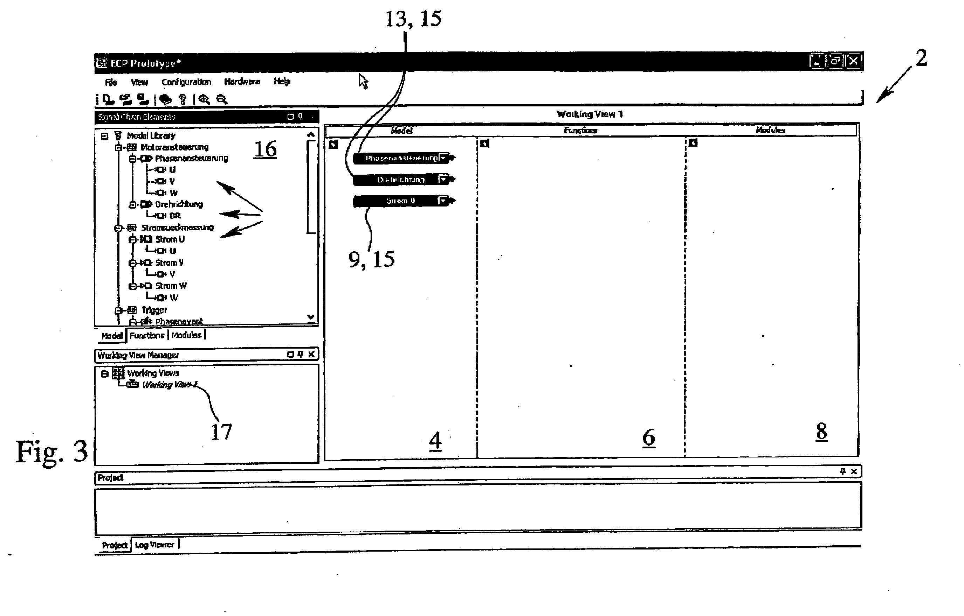

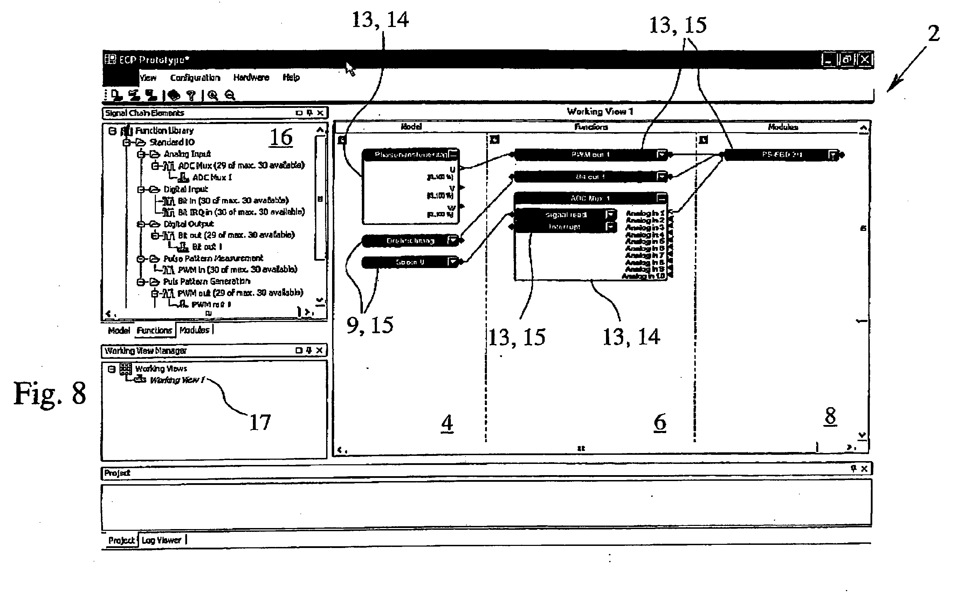

Rein reduzierte Darstellungen 15 von übergeordneten Einheiten 13 zeigen die Fig. 3 bis 5 und 7 und die gemischte Darstellung von übergeordneten Einheiten 13, teilweise in expandierter Darstellung 14, teilweise in reduzierter Darstellung 15, zeigt Fig. 8. Aus Fig. 8 ist weiterhin ersichtlich, daß übergeordnete Einheiten 13 bei dem dargestellten Ausführungsbeispiel der erfindungsgemäßen Konfigurationseinrichtung auch ineinander schachtelbar sind. Hierzu wird verwiesen auf die übergeordnete Einheit 13, die mit "ADC Mux 1' bezeichnet ist und die die weitere übergeordnete Einheit 13 "signal read" beinhaltet, die unabhängig von der expandierten oder reduzierten Darstellung der übergeordneten Einheit 13 "ADC Mux I" ebenfalls expandiert oder reduziert darstellbar ist.

Alle in den Fig. 1 bis 10 dargestellten Ausführungsbeispiele einer Konfigurationseinrichtung zeichnen sich ferner dadurch aus, daß alle verfügbaren I/O-Zugriffspunkte 3 und/oder Hardwarefunktionalitäten 5 und/oder Hardwareschnittstellen 7 in einem Auswahlfeld 16 dargestellt werden und in einem Auswahlfeld 16 einzeln oder gruppiert auswählbar sind. Ausgewählte I/O-Zugriffspunkte 3 und/oder Hardwarefunktionalitäten 5 und/oder Hardwareschnittstellen 7 können dann von dem Auswahlfeld 16 in das jeweils korrespondierende Konfigurationsfeld 4, 6, 8 übertragen werden.

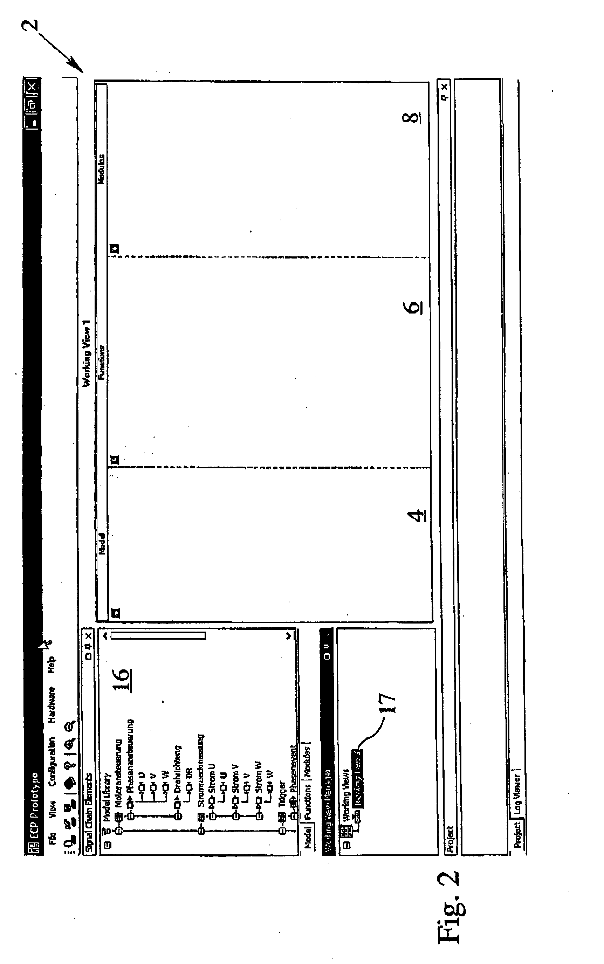

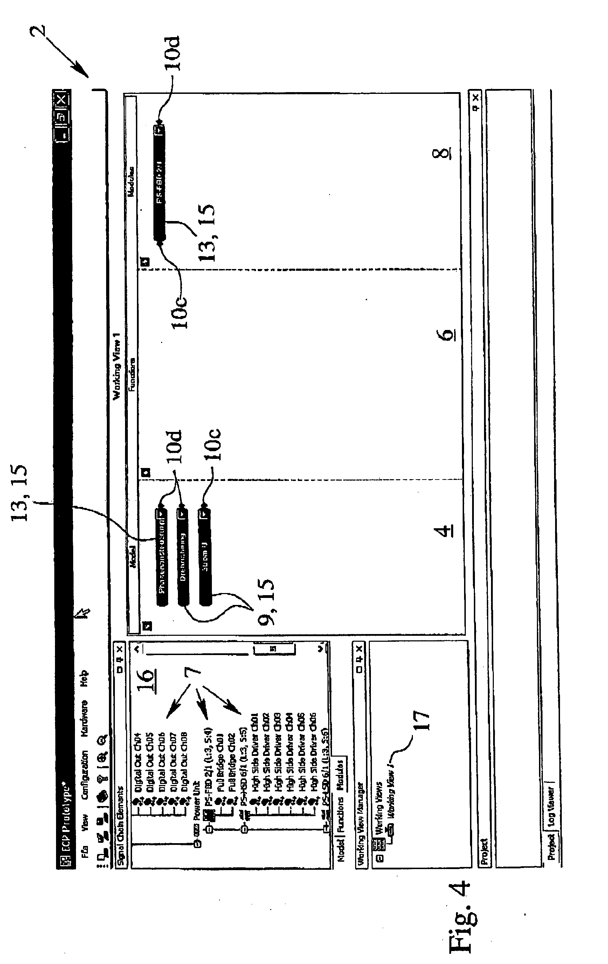

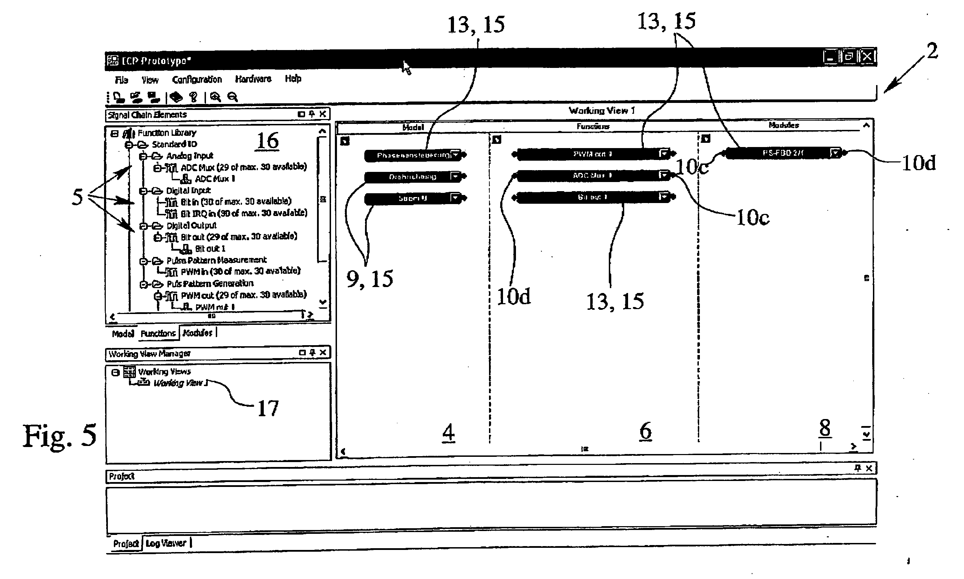

In den Fig. 2 bis 5 ist schrittweise dargestellt, wie aus dem Auswahlfeld 16 zunächst I/O-Zugriffspunkte 3 bzw. übergeordnete Einheiten 13 mit I/O-Zugriffspunkten 3 ausgewählt und in dem Modellkonfigurationsfeld 4 plaziert werden. In Fig. 4 wird aus dem Auswahlfeld 16 aus den vielen vorhandenen Hardwareschnittstellen 7 die mit "PS-FPD 2/I" bezeichnete Hardwareschnittstelle 7 ausgewählt und in dem Schnittstellenkonfigurationsfeld 8 plaziert. Entsprechend ist in Fig. 5 gezeigt, wie die Hardwarefünktionalitäten 5, die mit "PVVM out 1, "ADC Mux 1' und "Bit out 1" aus dem Auswahlfeld 16 ausgewählt und in dem Funktionskonfigurationsfeld 6 plaziert worden sind.

Bei den in den Fig. 1 bis 10 dargestellten Ausführungsbeispielen von Konfigurationseinrichtungen ist jeweils eine Auswahl von I/O-Zugriffspunkten 3 und/oder von Hardwarefunktionalitäten 5 und/oder von Hardwareschnittstellen 7 in einer Arbeitsansicht 17 zusammengefaßt worden. Es ist möglich, mehrere, sich teilweise inhaltlich überschneidende Auswahlen von I/O-Zugriffspunkten 3 und/oder Hardwarefunktionalitäten 5 und/oder Hardwareschnittstellen 7 in unterschiedlichen Arbeitsansichten 17 zusammenzufassen, so daß verschiedene Aspekte des zu konfigurierenden Steuerungssystem gezielt bearbeitet werden können, ohne daß nicht relevante I/OZugriffspunkte 3 oder Hardwarefunktionalitäten 5 oder Hardwareschnittstellen 7 von der eigentlichen Aufgabe ablenken.

Die Fig. 1 bis 10 spiegeln damit auch eine Variante des erfindungsgemäß beanspruchten Verfahrens zur Erzeugung mindestens eines Teils eines ausführbaren Steuerungsprogramms zur Steuerung eines Steuerungssystems wider, wobei mindestens ein 1/O-Zugriffspunkt 3 in einem Modellkonfigurationsfeld 4 und/oder mindestens eine Hardwarefunktionalität 5 in einem Funktionskonfigurationsfeld 6 und/oder mindestens eine Hardwareschnittstelle 7 in einem Schnittstellenkonfigurationsfeld 8 angezeigt wird bzw. werden und/oder mindestens ein angezeigter I/O-Zugriffspunkt 3 und mindestens eine angezeigte Hardwarefunktionalität 5 einander zugeordnet werden und/oder mindestens eine angezeigte Hardwarefunktionalität 5 und mindestens eine angezeigte Hardwareschnittstelle 7 einander zugeordnet werden, wobei ferner die I/O-Zugriffspunkte 3 im Modellkonfigurationsfeld 4, die Hardwarefunktionalitäten 5 im Funktionskonfigurationsfeld 6 und die Hardwareschnittstellen 7 im Schnittstellenkonfigurationsfeld 8 durch Blöcke 9 mit Eingangs- und/oder Ausgangsports 10a, 10b dargestellt werden und nachfolgend die I/O-Zugriffspunkte 3 und/oder die Hardwarefunktionalitäten 5 und/oder die Hardwareschnittstellen 7 einander durch graphische Zuordnungsmittel - insbesondere durch Signallinien 11 - zugeordnet werden und wobei letztlich unter Verwendung der in den vorigen Verfahrensschritten gewonnen Konfigurationsdaten das Steuerungsprogramm oder ein Teil des Steuerungsprogramms zur Steuerung eines Steuerungssystems automatisch generiert wird. Dies ergibt sich insbesondere aus den in den Fig. 2 bis 5 dargestellten Verfahrensschritten.

## Patentansprüche

1. Konfigurationseinrichtung (1) zur Konfiguration eines Steuerungssystems mit mindestens einer elektronischen Rechnereinheit und mindestens einem zugeordneten I/O-Gerät, wobei mindestens ein Teil eines mit der Konfiguration korrespondierenden Steuerungsprogramms zur Steuerung des Steuerungssystems erzeugbar ist und wobei die Konfigurationseinrichtung mindestens eine Anzeigevorrichtung (2) aufweist, wobei mindestens ein I/O-Zugriffspunkt (3) in einem Modellkonfigurationsfeld (4) und mindestens eine Hardwarefunktionalität (5) in einem Funktionskonfigurationsfeld (6) und mindestens eine Hardwareschnittstelle (7) in einem Schnittstellenkonfigurationsfeld (8) mittels der Anzeigevorrichtung (2) darstellbar sind, wobei mindestens ein I/O-Zugriffspunkt und mindestens eine Hardwarefunktionalität (5) einander zuordenbar sind und/oder wobei mindestens eine Hardwarefunktionalität (5) und mindestens eine Hardwareschnittstelle (7) einander zuordenbar sind,
**dadurch gekennzeichnet,**
**daß** die I/O-Zugriffspunkte (3) im Modellkonfigurationsfeld (4), die Hardwarefunktionalitäten (5) im Funktionskonfigurationsfeld (6) und die Hardwareschnittstellen (7) im Schnittstellenkonfigurationsfeld (8) durch Blöcke (9) mit Eingangs- und/oder Ausgangsports (10a, 10b) darstellbar sind, wobei die I/O-Zugriffspunkte (3) und/oder die Hardwarefunktionalitäten (5) und/oder die Hardwareschnittstellen (7) einander durch Signallinien (11) - zugeordnet werden,
**daß** mehrere I/O-Zugriffspunkte (3) im Modellkonfigurationsfeld (4) und/oder mehrere Hardwarefunktionalitäten (5) im Funktionskonfigurationsfeld (6) und/oder mehrere Hardwareschnittstellen (7) im Schnittstellenkonfigurationsfeld (8) jeweils zu einer übergeordneten Einheit (13) zusammenfassbar sind und
**daß** eine übergeordnete Einheit (13) in einer expandierten Darstellung (14) alle Eingangs- und Ausgangsports (10a, 10b) der von der übergeordneten Einheit (13) umfassten I/O-Zugriffspunkte (3) oder Hardwarefunktionalitäten (5) oder Hardwareschnittstellen (7) separat darstellt und/oder daß eine überordnete Einheit (13) in einer reduzierten Darstellung (15) alle Eingangs- und Ausgangsports (10a, 10b) der von der übergeordneten Einheit (13) umfassten I/O-Zugriffspunkte (3) oder Hardwarefunktionalitäten (5) oder Hardwareschnittstellen (7) durch wenigstens einen gemeinsamen Eingangs- und wenigstens einen gemeinsamen Ausgangsport (10c, 10d) darstellt und daß die dargestellten Inhalte (12a, 12b, 12c) des Modellkonfigurationsfeldes (4) und/oder des Funktionskonfigurationsfeldes (6) und/oder des Schnittstellenkonfigurationsfeldes (8) so relativ zueinander verschiebbar sind, daß einander zugeordnete oder zuzuordnende I/O-Zugriffspunkte (3) und/oder Hardwarefunktionalitäten (5) und/oder Hardwareschnittstellen (7) benachbart zueinander gleichzeitig darstellbar und damit einander zuordenbar sind und gemeinsam konfigurierbar sind
und **daß** einmal durch Signallinien vorgenommene Zuordnungen zwischen Elementen verschiedener Konfigurationsfelder auch bei der Relativbewegung von Inhalten dieser Felder beibehalten werden, indem die Signallinien der Relativbewegung elastisch folgen.

2. Konfigurationseinrichtung nach Anspruch 1, **dadurch kennzeichnet, daß** zu mindestens einem ausgewählten I/O-Zugriffspunkt (3) im Modellkonfigurationsfeld (4) oder zu mindestens einer Hardwarefunktionalität (5) im Funktionskonfigurationsfeld (6) oder zu mindestens einer Hardwareschnittstelle (7) im Schnittstellenkonfigurationsfeld (8) die zugeordneten und/oder zuordenbaren I/O-Zugriffspunkte (3) und/oder Hardwarefunktionalitäten (5) und/oder Hardwareschnittstellen (6) automatisch erkennbar und mit der Anzeigevorrichtung (2) selektiv darstellbar sind.

3. Konfigurationseinrichtung nach einem der Ansprüche 1 oder 2, **dadurch gekennzeichnet, daß** alle verfügbaren 1/0-Zugriffspunkte (3) und/oder Hardwarefunktionalitäten (5) und/oder Hardwareschnittstellen (7) in einem Auswahlfeld (16) darstellbar und einzeln auswählbar sind, und ausgewählte 1/0-Zugriffspunkte (3) und/oder Hardwarefunktionalitäten (5) und/oder Hardwareschnittstellen (7) von dem Auswahlfeld (16) in das jeweils korrespondierende Konfigurationsfeld (Modellkonfigurationsfeld (4), Funktionskonfigurationsfeld (6), Schnittstellenkonfigurationsfeld (8)) übertragbar sind.

4. Konfigurationseinrichtung nach einem der Ansprüche 1 bis 3, **dadurch gekennzeichnet, daß** mindestens eine Auswahl von I/O-Zugriffspunkten (3) und/oder von Hardwarefunktionalitäten (5) und/oder von Hardwareschnittstellen (7) in mindestens einer Arbeitsansicht (17) zusammenfaßbar ist, wobei die Auswahlen von I/O-Zugriffspunkten (3) und/oder von Hardwarefunktionalitäten (5) und/oder von Hardwareschnittstellen (7) verschiedener Arbeitsansichten (17) Schnittmengen aufweisen können.

5. Konfigurationseinrichtung nach Anspruch 4, **dadurch gekennzeichnet, daß** mehrere Arbeitsansichten zum einer einzigen Arbeitsansicht zusammenführbar sind, wobei mehrfach vorhandene identische I/O-Zugriffspunkte (3) und/ oder Hardwarefunktionalitäten (5) und/oder Hardwareschnittstellen (7) aus der einzigen Arbeitsansicht eliminiert werden, wobei die aus verschiedenen Arbeitsansichten stammenden I/O-Zugriffspunkte (3) und/oder Hardwarefunktionalitäten (5) und/oder Hardwareschnittstellen (7) voneinander unterscheidbar darstellbar sind.

6. Computerprogramm mit Programmcode-Mitteln, das alle Merkmale der Konfigurationseinrichtung gemäß einem der Ansprüche 1 bis 5 aufweist, wenn das Programm auf einer Datenverarbeitungsanlage mit einer Anzeigevorrichtung ausführt wird.

## Claims

1. Configuration device (1) for configuring a control system with at least one electronic processing unit and at least one associated I/O device, wherein at least a portion of a control program corresponding to a configuration is generated for controlling the control system and wherein the configuration device (1) has at least one display device (2), wherein at least one I/O access point (3) can be displayed in a model configuration field (4), at least one hardware functionality (5) can be displayed in a function configuration field (6) and at least one hardware interface (7) can be displaced in an interface configuration field (8) by means of a display device (2), wherein at least one I/O access point and at least one hardware functionality (5) can be assigned to one another and/or wherein at least one hardware functionality (5) and at least one hardware interface (7) can be assigned to one another
**characterized in**
**that** the I/O access points (3) in the model configuration field (4), the hardware functionality (5) in the function configuration field (6) and the hardware interface (7) in the interface configuration field (8) can be displayed by blocks (9) with input and/or output ports (10a, 10b), wherein the I/O access points (3) and/or the hardware functionalities (5) and/or the hardware interfaces (7) can be assigned to one another using signal lines (II),
**that** multiple I/O access points (3) in the model configuration field (4) and/or multiple hardware functionalities (5) in the function configuration field (6) and/or multiple hardware interfaces (7) in the interface configuration field (8) can be combined into a higher-level unit (13),
**that** all input and output ports (10a, 10b) of the I/O access points (3) or of the hardware functionalities (5) or of the hardware interfaces (7) that are included in the higher-level unit (13) are displayed separately by the higher-level unit (13) in an expanded representation (14) and/or all input and output ports (10a, 10b) of the I/O access points (3) or of the hardware functionalities (5) or of the hardware interfaces (7) that are included in the higher-level unit (13) are displayed by the higher-level unit (13) in a reduced representation (15) by at least one common input and at least one common output port (10c, 10d) and that the displayed contents (12a, 12b, 12c) of the model configuration field (4) and/or the function configuration field (6) and/or the interface configuration field (8) can be moved relative to each other in such a manner that I/O access points (3) and/or hardware functionalities (5) and/or hardware interfaces (7) assigned to one another or to be assigned to one another can be simultaneously displayed next to one another and thus can be assigned to one another and/or can be commonly configured,
and **that** associations between elements of different configuration fields carried out by signal lines are also retained by the relative movement of contents of these fields in that the signal lines elastically follow the relative movement.

2. Configuration device according to claim 1, **characterized in that** for at least one selected I/O access point (3) in the model configuration field (4) or for at least one hardware functionality (5) in the function configuration field (6) or for at least one hardware interface (7) in the interface configuration field (8), the assigned and/or assignable I/O access points (3) and/or hardware functionalities (5) and/or hardware interfaces (6) can be automatically detected and can be selectively displayed by the display device (2).

3. Configuration device according to any one of claims 1 to 5, **characterized in that** all available I/O access points (3) and/or hardware functionalities (5) and/or hardware interfaces (7) can be displayed and/or individually selected in a selection field (16) and selected I/O access points (3) and/or hardware functionalities (5) and/or hardware interfaces (7) can be transferred from the selection field (16) to the corresponding configuration field (model configuration field (4), function configuration field (6), interface configuration field (8)).

4. Configuration device according to any claim 1 to 3, **characterized in that** at least one selection of I/O access points (3) and/or of hardware functionalities (5) and/or of hardware interfaces (7) can be combined in at least one working view (17), wherein the selection of I/O access points (3) and/or of hardware functionalities (5) and/or of hardware interfaces (7) of different working views (17) can have intersections.

5. Configuration device according to claim 4, **characterized in that** multiple working views can be combined to one single working view wherein identical I/O access points (3) and/or hardware functionalities (5) and/or hardware interfaces (7) that exist multiple times are eliminated from the single working view, wherein the I/O access points (3) and/or hardware functionalities (5) and/or hardware interfaces (7) originally belonging to different working views can be displayed so that they can be distinguished from each other.

6. Computer program with program code means that has all features of the configuration device according to any one of claims 1 to 5, when the program is executed by a data processing system with a display device.

## Revendications

1. Dispositif de configuration (1) pour configurer un système de commande comprenant au moins une unité de calcul électronique et au moins un appareil d'E/S associé, au moins une partie d'un programme de commande correspondant à la configuration pouvant être généré pour commander le système de commande et le dispositif de configuration présentant au moins un dispositif d'affichage (2), au moins un point d'accès d'E/S (3) dans un champ de configuration de modèle (4) et au moins une fonctionnalité matérielle (5) dans un champ de configuration de fonction (6) et au moins une interface physique (7) dans un champ de configuration d'interface (8) pouvant être représentés au moyen du dispositif d'affichage (2), au moins un point d'accès d'E/S et au moins une fonctionnalité matérielle (5) pouvant être associés l'un à l'autre et/ou au moins une fonctionnalité matérielle (5) et au moins une interface physique (7) pouvant être associées l'une à l'autre,
**caractérisé en ce**
**que** les points d'accès d'E/S (3) dans le champ de configuration de modèle (4), les fonctionnalités matérielles (5) dans le champ de configuration de fonction (6) et les interfaces physiques (7) dans le champ de configuration d'interface (8) peuvent être représentés sous la forme de blocs (9) avec des ports d'entrée et/ou de sortie (10a, 10b), les points d'accès d'E/S (3) et/ou les fonctionnalités matérielles (5) et/ou les interfaces physiques (7) sont associés les uns aux autres par des lignes de signal (11),
en ce que plusieurs points d'accès d'E/S (3) dans le champ de configuration de modèle (4) et/ou plusieurs fonctionnalités matérielles (5) dans le champ de configuration de fonction (6) et/ou plusieurs interfaces physiques (7) dans le champ de configuration d'interface (8) peuvent respectivement être regroupés en une unité d'ordre supérieure (13), et
en ce qu'une unité d'ordre supérieur (13) dans une représentation agrandie (14) représente séparément tous les ports d'entrée et de sortie (10a, 10b) des points d'accès d'E/S (3) ou des fonctionnalités matérielles (5) ou des interfaces physiques (7) englobés par l'unité d'ordre supérieur (13) et/ou en ce qu'une unité d'ordre supérieur (13) dans une représentation réduite (15) représente tous les ports d'entrée et de sortie (10a, 10b) des points d'accès d'E/S (3) ou des fonctionnalités matérielles (5) ou des interfaces physiques (7) englobés par l'unité d'ordre supérieur (13) par au moins un port d'entrée commun et au moins un port de sortie commun (10c, 10d), et en ce que les contenus (12a, 12b, 12c) affichés du champ de configuration de modèle (4) et/ou du champ de configuration de fonction (6) et/ou du champ de configuration d'interface (8) peuvent être décalés les uns par rapport aux autres de telle sorte que les points d'accès d'E/S (3) et/ou les fonctionnalités matérielles (5) et/ou les interfaces physiques (7) associés ou à associer les uns aux autres peuvent être affichés simultanément de manière contiguë et peuvent ainsi être associés les uns aux autres et peuvent être configurés en commun
et en ce que les associations entre les éléments de différents champs de configuration effectuées une fois par des lignes de signal sont conservées même lors du mouvement relatif des contenus de ces champs en ce que les lignes de signal suivent le mouvement relatif par élasticité.

2. Dispositif de configuration selon la revendication 1, **caractérisé en ce que** pour au moins un point d'accès d'E/S (3) sélectionné dans le champ de configuration de modèle (4) ou au moins une fonctionnalité matérielle (5) dans le champ de configuration de fonction (6) ou au moins une interface physique (7) dans le champ de configuration d'interface (8), les points d'accès d'E/S (3) et/ou les fonctionnalités matérielles (5) et/ou les interfaces physiques (7) associés et/ou pouvant être associés peuvent être reconnus automatiquement et peuvent être représentés de manière sélective avec le dispositif d'affichage (2).

3. Dispositif de configuration selon l'une des revendications 1 ou 2, **caractérisé en ce que** tous les points d'accès d'E/S (3) et/ou fonctionnalités matérielles (5) et/ou interfaces physiques (7) disponibles peuvent être représentés dans un champ de sélection (16) et peuvent être sélectionnés individuellement, et les points d'accès d'E/S (3) et/ou fonctionnalités matérielles (5) et/ou interfaces physiques (7) sélectionnés peuvent être transférés du champ de sélection (16) dans le champ de configuration correspondant respectif (champ de configuration de modèle (4), champ de configuration de fonction (6), champ de configuration d'interface (8)).

4. Dispositif de configuration selon l'une des revendications 1 à 3, **caractérisé en ce qu'**au moins une sélection de points d'accès d'E/S (3) et/ou de fonctionnalités matérielles (5) et/ou d'interfaces physiques (7) peut être regroupée dans au moins une vue de travail (17), les sélections de points d'accès d'E/S (3) et/ou de fonctionnalités matérielles (5) et/ou d'interfaces physiques (7) des différentes vues de travail (17) pouvant présenter des intersections d'ensembles.

5. Dispositif de configuration selon la revendication 4, **caractérisé en ce que** plusieurs vues de travail peuvent être regroupées en une vue de travail unique, des points d'accès d'E/S (3) et/ou fonctionnalités matérielles (5) et/ou interfaces physiques (7) identiques présents plusieurs fois étant éliminés de la vue de travail unique, les points d'accès d'E/S (3) et/ou fonctionnalités matérielles (5) et/ou interfaces physiques (7) qui sont issus de différentes vues de travail pouvant être représentés avec différentiation les uns des autres.

6. Programme informatique comprenant des moyens de code de programme, lequel présente toutes les caractéristiques du dispositif de configuration selon l'une des revendications 1 à 5 lorsque le programme est exécuté sur un équipement de traitement de données muni d'un dispositif d'affichage.
